# EUROPÄISCHE PATENTSCHRIFT

(11) **EP 0 413 791 B1**
(45) Veröffentlichungstag und Bekanntmachung des Hinweises auf die Patenterteilung: **12.05.1993**
(21) Anmeldenummer: 90903753.3
(22) Anmeldetag: 14.03.1990
(51) Int. Cl.: F25B 37/00, B01D 53/18, F28D 7/02, F25B 15/10

(54) **ABSORBER FÜR EINE DIFFUSIONSABSORPTIONSANLAGE**
ABSORBER FOR A DIFFUSION ABSORPTION PLANT
ABSORBEUR POUR UN SYSTEME D'ABSORPTION DIFFUSION

(30) Priorität: 14.03.1989 CH 934/89
(43) Veröffentlichungstag der Anmeldung: 27.02.1991
(73) Patentinhaber: STIERLIN, Hans, CH-8952 Schlieren (CH)
(72) Erfinder: STIERLIN, Hans, CH-8952 Schlieren (CH); FERGUSON, John, Ross Grove Hill, Herts (GB)
(74) Vertreter: Blum, Rudolf Emil Ernst
(86) Internationale Anmeldenummer: CH9000067
(87) Internationale Veröffentlichungsnummer: WO9010835

(56) Entgegenhaltungen:
- EP-A- 0 117 829
- EP-A- 0 131 820
- DE-B- 1 119 883
- DE-C- 675 538
- DE-C- 693 470
- FR-A- 2 185 781
- FR-A- 2 492 067
- GB-A- 628 660
- US-A- 1 987 655
- US-A- 2 207 838
- US-A- 3 138 201
- US-A- 4 127 009

## Beschreibung

Die vorliegende Erfindung betrifft einen Absorber für eine Diffusionsabsorptionsanlage, mit mindestens einer, in einem zylindrischen Gehäuse stehend angeordneten, helixförmig verlaufenden Rohrschlange, deren Aussenfläche kapillarwirksam ist und der eine Kältemittellösung zugeführt wird, wobei die einzelnen Rohrwindungen zueinander einen Abstand besitzen.

Diffusionsabsorptionsanlagen sind als Kleinkälteanlagen zur Verwendung in Haushaltkühlschränken seit langem bekannt. Diese Absorptionskälteanlagen wurden bezüglich ihres Wirkungsgrades entscheidend verbessert. Ein solches Aggregat ist z.B. im Schweizer Patent Nr. 475 527 ausführlich beschrieben. Diese Aggregate weisen jedoch eine relativ geringe Leistung auf. Für grosse Kälteanlagen, z.B. zur Klimatisierung oder zur Verwendung als Wärmepumpen in Heizanlagen sind sie deshalb nicht geeignet. In diesen Anlagen werden Ammoniak und Wasser als Stoffpaare eingesetzt, wobei das Wasser der absorbierende Stoff darstellt und das Ammoniak das Kältemittel. Als druckausgleichendes Hilfsgas wird in der Regel Wasserstoff oder Helium verwendet. Absorber in Anlagen, die eine grosse Leistung zu erbringen haben, müssen in der Lage sein, die dafür erforderlichen grossen Mengen an Kältemittel zu absorbieren und die Absorptionswärme an das zu wärmende Medium mit möglichst geringen Verlusten abzugeben. Bei den bekannten Diffusionsabsorptionsanlagen kleiner Leistung wird die Absorptionswärme an die Umgebungsluft abgegeben. Bei grossen Anlagen ist das in der Regel nicht möglich oder unerwünscht, vielmehr soll die Absorptionswärme mittels eines Sekundärsystems mit flüssigem Medium abgeführt werden. Solche Anlagen sind in der DE-C-693 470 und in der EP-A-0 131 820 gezeigt. Sie besitzen den Nachteil relativ schlechter Diffusion bei ungenügendem Wärmeübergang. Aehnliches gilt für Anlagen gemäss der US-A-4 127 009, welche auf plattenartigen Wärmetauscherelementen beruhen.

Ziel der vorliegenden Erfindung ist deshalb, einen Absorber für eine Diffusionsabsorptionsanlage grosser Leistung zu zeigen, bei welchem diese Grössen optimiert sind.

Diese Aufgabe wird bei einem Absorber der eingangs erwähnten Art durch die in Anspruch 1 genannten Merkmale gelöst.

Im folgenden wird ein Ausführungsbeispiel der Erfindung anhand der Zeichnungen erläutert.

Es zeigen:
Figur 1 eine schematische Darstellung einer Diffusionsabsorptionsanlage grosser Leistung.
Figur 2 eine teilweise aufgeschnittene Teilansicht eines Absorbers, und
Figur 3 eine Aufsicht auf den Absorber gemäss Figur 2.

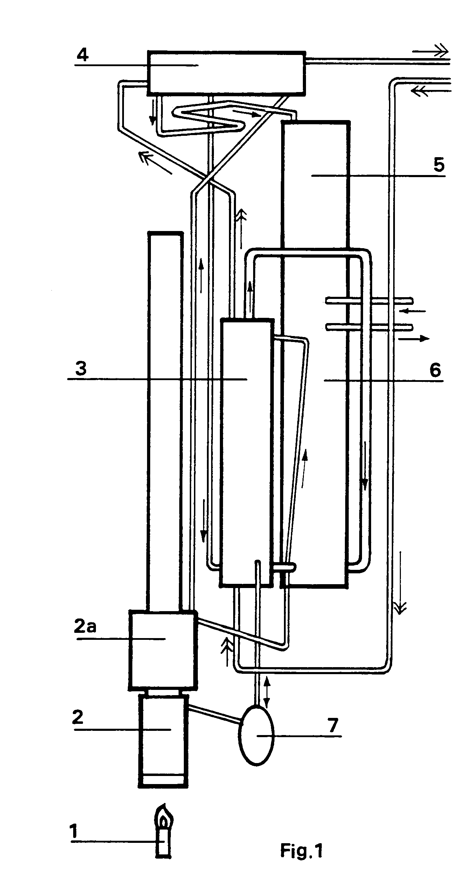

In Figur 1 ist das Schema einer Diffusionsabsorptionsanlage grosser Leistung dargestellt. Ein derartiges Aggregat umfasst einen Gasbrenner 1 oder eine andere Wärmequelle und einen Austreiber mit Gasblasenpumpe 2, in welchem der Kältemitteldampf aufgetrieben wird. Dieser Dampf gelangt über eine Dreifach-Wärmetauscher 2a durch eine Dampfleitung in den Kondensator 4. Hier kondensiert der Kältemitteldampf und das Kondensat fliesst durch eine Kondensatleitung in einen Verdampfer 5, wo es unter Wärmeaufnahme verdampft. Das durch die Verdampfung reich gewordene Hilfsgas strömt in einen Gaswärmetauscher 6 und kühlt das dort einströmende arme Gas ab. Das reiche Gas strömt anschliessend in einen Absorber 3, wo ein Teil des Kältemitteldampfs durch die arme Lösung absorbiert wird. Die durch den Absorptionsvorgang reich gewordene Lösung gelangt über den Dreifach-Wärmetauscher 2a in den Austreiber 2. Das Kältemittel wird hier wie erwähnt ausgetrieben und die dadurch arm gewordene Lösung mittels der Gasblasenpumpe hochgepumpt und dadurch in die Lage versetzt, oben in den Absorber zu fliessen, wobei die arme Lösung zuvor ebenfalls durch den Dreifach-Wärmetauscher 2a geleitet wird. Der Absorber 3 und der Kondensator 4 werden durch das Medium eines Sekundärsystems durchflossen, das dort Wärme auf einem hohen Temperaturniveau aufnimmt. Der Verdampfer 5 wird durch ein Medium eines weiteren Sekundärsystems durchflossen, das ihm Wärme auf einem tiefen Temperaturniveau zuführt.

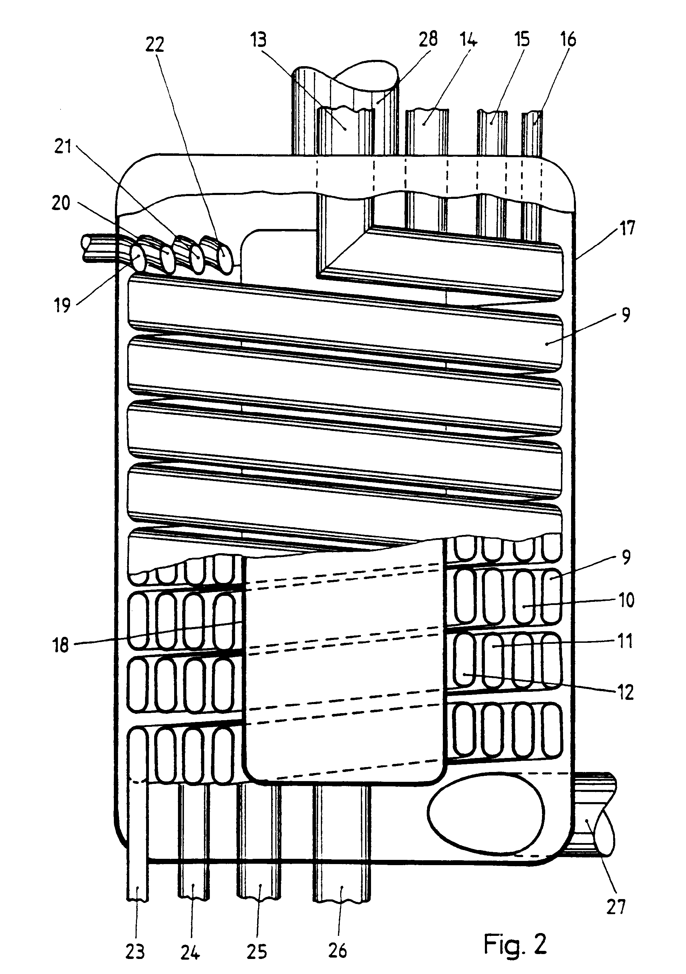

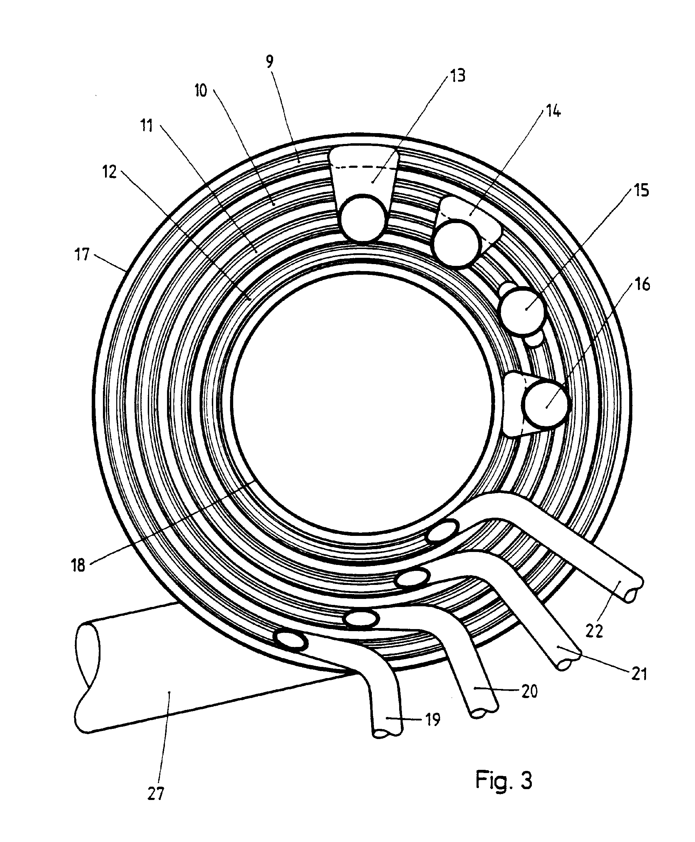

In Figur 2 wird ein Absorber dargestellt. Dieser Absorber besteht aus vier koaxial angeordneten Rohrschlangen 9 bis 12, wobei die äusserste Schlange 9 sichtbar ist und die inneren Schlangen 10 bis 12 im aufgeschnittenen Teil der Zeichnung im Querschnitt erkennbar sind. Die Figur 3 zeigt diese koaxiale Anordnung in der Aufsicht von oben. Im innern der Rohre dieser Rohrschlangen 9 bis 12 fliesst die Flüssigkeit des Sekundärsystems, die dem Absorber Wärme entnimmt. Die Einspeisung der Flüssigkeit des Sekundärsystems erfolgt parallel durch Einlässe 23 bis 26 und wird am Ende der vier Rohrschlangen durch vier Auslässe 13 bis 16 entnommen. Die Rohrschlangen 9 bis 12 befinden sich in einem zylindrischen Gehäuse 17, das im innern ein Blindrohr 18 aufweist. Das Blindrohr 18 und das Gehäuse 17 sind oben und unten mit je einem Deckel fest verbunden, wobei das Blindrohr offen gegenüber der Umgebung ist, damit innerhalb des Blindrohrs atmosphärischer Druck herrscht. Das in der Diffusionsabsorptionswärmepumpe verwendete Hilfsgas wird durch ein Gaseinlassrohr 27 zugeführt und strömt in dem durch das Blindrohr 18 und dem Gehäuse 17 gebildeten Raum entlang den äusseren Oberflächen der Rohrschlangen im Gegenstrom zur armen Lösung nach oben und verlässt den Absorber durch ein Gasauslassrohr 28. Die arme Lösung, hier eine wässerige Ammoniaklösung, kommt aus dem Austreiber und wird in vier Teilströme aufgeteilt, um dem Absorber durch Zuführungen 19 bis 22 zugeführt zu werden. Diese Zuführungen 19 bis 22 sind im oberen Teil des Absorbers so angeordnet, dass den Rohrschlangen durch je eine der Zuführungen 19 bis 23 die arme Lösung einzeln zugeführt wird (Figur 3).

Die Rohre der Rohrschlangen 9 bis 12 weisen einen flachovalen Querschnitt auf. Dieser ist im aufgeschnittenen Teil der Figur 2 ersichtlich. Diese Querschnittsform weist gegenüber den sonst üblichen kreisrunden Querschnitten in mehrfacher Hinsicht erhebliche Vorteile auf. Zum einen wird nämlich der Wärmeübergang der Flüssigkeit des Sekundärsystems durch den Formfaktor ganz erheblich verbessert. Der Wärmeübergang wird um so besser, je flacher das Rohrprofil ist. Eine Verflachung des Rohrprofils vergrössert aber auch den Druckverlust, der beim Durchströmen der Flüssigkeit im innern der Rohre entsteht. Es hat sich gezeigt, dass ein Profil mit einer inneren lichten Weite von 4 mm bezüglich Wärmeübergangsverbesserung noch vertretbarem Druckverlust am günstigsten ist.

Das flache Profil der Rohrschlangen wirkt sich zum anderen aber auch günstig aus für die gleichmässige Verteilung der Kältemittellösung über die ganze Rohroberfläche, ein Erfordernis, das für einen leistungsfähigen Absorber erfüllt werden muss. Das aus dem Verdampfer stammende reiche Hilfsgas gelangt in den Absorber und wird von der armen Lösung absorbiert. Die durch den Absorptionsvorgang enstehende Wärmeenergie wird dem Medium des Sekundärsystems zugeführt. Die hier dargestellte Diffusionsabsorptionswärmepumpe weist wärmeseits eine Leistung von ca. 3 kW auf, wobei ca. 1 kW aus der Verdampfungsleistung des Verdampfers stammt. Um eine derart hohe Leistung zu erzielen, ist es erforderlich, dass im Absorber eine grosse Oberfläche mit armer Lösung benetzt wird, damit dem Medium des Sekundärsystems ausreichend Wärmeenergie zugeführt werden kann. Im beschriebenen Ausführungsbeispiel wird diese Fläche durch vier konzentrisch angeordnete Rohrschlangen zur Verfügung gestellt. Damit die Absorption gleichmässig über dem ganzen Oberflächenbereich stattfinden kann, ist es notwendig, dass jede Stelle der Rohroberflächen kontinuierlich mit Kältemittellösung versorgt wird. Dazu dienen im wesentlichen zwei Massnahmen. Zum einen sind die einzelnen Windungen der Rohrschlangen im Abstand zueinander angeordnet, wie dies aus Figur 2 entnommen werden kann. In dem durch diesen Abstand gebildeten Spalt kann sich die Kältemittellösung infolge ihrer Oberflächenspannung sammeln und spiralförmig nach unten fliessen, wobei kontinuierlich ein Teil ders Kältemittellösung immer wieder über die Rohrfläche praktisch senkrecht nach unten verteilt wird und sich in dem durch den nächsten Spiralgang gebildeten Spalt mit dem dort vorhandenen Lösung wieder vermischt. Die oberste Windung jeder Rohrschlange weist einen erhöhten Abstand auf und bildet demnach einen grösseren Spalt. Dies gewährleistet, dass das durch die Zuführungen 19 bis 22 eintretende Kältemittelllösung sehr schnell den ganzen radialen Umfang einer Rohrschlange benetzt. Zum andern hat die Oberfläche der Rohrschlangen so beschaffen zu sein, dass eine gleichmässige Benetzung zustande kommt. Im Ausführungsbeispiel wird das dadurch erreicht, dass die Rohre mit einem randrierungsähnlichen Kreuzprofil, einer sogenannten Rändelung, versehen sind. Bei diesem Profil ist darauf zu achten, dass die einzelnen Einkerbungen durchgehend sind und bei den Kreuzungen mit den quer dazu verlaufenden Kerbungen nicht verschlossen werden. Dies gewährleistet eine ausserordentlich gute Benetzung der ganzen Rohroberflächen mit einer dünnen Kältemittellösungsschicht. Zudem vergrössert diese Randrierung die Oberfläche der Rohre. Die Lösung wird auf der Rohroberfläche gleichsam verwirbelt.

Die Rohroberfläche kann auch anders als gerändelt beschaffen sein, entscheidend ist ihre Kapillarwirksamkeit. So können beispielsweise die Rohre mit eng gelegten spiralig um die Rohre verlaufende Kerben versehen werden.

Der Abstand zwischen den konzentrisch angeordneten Rohrspiralen ist möglichst klein zu halten. Ebenso der Abstand zwischen der äussersten Rohrschlange 9 und dem zylindrischen Gehäuse 17 und der innersten Rohrschlange 12 und dem Blindrohr 18. Denn die durch diese Abstände gebildeten Spälte werden durch das reiche Hilfsgas durchströmt. Je kleiner dieser Raum ist, desto effektiver erfolgt die Diffusion des Ammoniaks aus dem Gas (Figur 2). Allerdings dürfen diese Zwischenräume nicht beliebig klein sein, da sonst für das durchströmende Hilfsgas ein zu grosser Druckverlust entstehen würde, der eine hinreichende Zirkulation des Hilfsgases im Gesamtsystem verhindern würde. Das im innern des Absorbers angeordnete Blindrohr 18 hat aber nicht nur die Aufgabe, einen für eine leistungsfähige Diffusions notwendigen geringen Spalt zu bilden, es reduziert auch das unter Druck stehende Volumen. Dies ist für die Sicherheit des Apparats von entscheidender Bedeutung (Kesselformel).

Die Rohrschlangen 13 bis 16 besitzen infolge ihrer konzentrischen Anordnung verschieden grosse Durchmesser, dadurch wird auch die Rohroberfläche der einzelnen Schlangen unterschiedlich gross. Es muss also dafür gesorgt werden, dass die einzelnen Rohrschlangen ihrer Oberfläche entsprechend mit verschieden grossen Mengen von Kältemittellösung gespeist werden. Eine Verteilervorrichtung die zwischen Austreiber und Absorber geschaltet ist, nimmt diese Aufteilung in vier unterschiedliche Teilströme der armen Lösung vor. Mit dem am Ausführungsbeispiel dargestellten Absorbers wird es möglich, Diffusionsabsorptionswärmeanlagen mit ausreichend grossen Leistungen herzustellen, die in der Lage sind, als Wärmepumpen in Heizanlagen oder zum Zwecke der Klimatisierung Verwendung zu finden.

## Patentansprüche

1. Absorber für eine Diffusionsabsorptionsanlage mit mindestens einer, in einem zylindrischen Gehäuse (17) stehend angeordneten, helixförmig verlaufenden Rohrschlange (9), deren Aussenfläche kapillar wirksam ist und der eine Kältemittellösung zugeführt wird, wobei die einzelnen Rohrwindungen zueinander einen Abstand besitzen, dadurch gekennzeichnet, dass die Rohrschlange (9) ein flachovales, stehendes Rohrprofil aufweist, wobei der Abstand zwischen benachbarten, stehenden Rohrwindungen so bemessen ist, dass sich die Kältemittellösung infolge ihrer Oberflächenspannung im Spalt sammelt und schraubenförmig nach unten fliesst, wobei sich kontinuierlich ein Teil davon über die Rohraussenfläche verteilt.

2. Absorber nach Anspruch 1, dadurch gekennzeichnet, dass der Abstand der obersten Rohrwindung zur nächsten Rohrwindung grösser ist als die übrigen Windungsabstände der Rohrschlange.

3. Absorber nach einem der Ansprüche 1 oder 2, dadurch gekennzeichnet, dass im Innern des Absorbergehäuses (17) koaxial ein Blindrohr (18) angeordnet ist.

4. Absorber nach einem der Ansprüche 1 bis 3, dadurch gekennzeichnet, dass eine oder mehrere weitere helixförmig verlaufende Rohrschlangen (10,11,12) im Absorbergehäuse (17) vorgesehen sind, die zur ersten Rohrschlange (9) koaxial verlaufen, wobei zwischen benachbarten, koaxialen Rohrschlangen ein Abstand freigehalten ist für die Durchströmung eines Hilfsgases.

5. Absorber nach einem der Ansprüche 1 bis 4, dadurch gekennzeichnet, dass die Rohroberfläche der Rohrschlangen gerändelt ausgebildet ist.

6. Absorber nach einem der Ansprüche 1 bis 5, dadurch gekennzeichnet, dass die Rohroberfläche der Rohrschlangen mit spiralig um die Rohre verlaufenden Kerben versehen ist.

## Claims

1. Absorber for a diffusion absorption plant with at least one helically extending tube coil (9) arranged uprightly in a cylindrical housing (17), the outer surface of which tube coil is capillary active and which is fed by a refrigerant solution, whereby the individual windings of the tube are located at a distance from each other, characterized in that the tube coil (9) has a flat-oval upright tube profile, whereby the distance between neighbouring, standing tube windings is chosen such that the refrigerant solution is accumulated in the gap because of its surface tension and is flowing downwards helically, whereby a part of it is continually being distributed over the outer surface of the tube.

2. Absorber according to claim 1, characterized in that the distance between the topmost tube winding and the next following tube winding is larger than the other winding distances of the tube coil.

3. Absorber according to one of the claims 1 or 2, characterized in that a blind tube (18) is arranged coaxially inside the absorber housing (17).

4. Absorber according to one of the claims 1 to 3, characterized in that one or more additional helical tube coils (10, 11, 12) are provided in the absorber housing (17) which extend coaxially to the first tube coil (9), whereby a gap is kept open between neighbouring, coaxial tube coils for the flowing through of an auxiliary gas.

5. Absorber according to one of the claims 1 to 4, characterized in that the tube surface of the tube coils is knurled.

6. Absorber according to one of the claims 1 to 5, characterized in that the tube surface of the tube coils is provided with grooves extending spirally around the tubes.

## Revendications

1. Absorbeur pour une installation d'absorption par diffusion, comprenant au moins un serpentin tubulaire (9) enroulé en hélice, disposé verticalement dans une enveloppe cylindrique (17), dont la surface extérieure se comporte comme un capillaire, et auquel une solution d'agent réfrigérant est acheminée, les différentes spires tubulaires étant espacées d'un certain écartement, caractérisé en ce que le serpentin tubulaire (9) possède un profil de tube en ovale aplati vertical, l'écartement entre deux spires tubulaires verticales voisines étant calculé de manière que, sous l'effet de sa tension superficielle, la solution d'agent réfrigérant se rassemble dans la fente et s'écoule de haut en bas en écoulement hélicoïdal, une partie de cette solution se répartissant alors continuellement sur la surface extérieure du tube.

2. Absorbeur selon la revendication 1, caractérisé en ce que l'écartement entre la spire tubulaire extrême supérieure et la spire tubulaire suivante est plus grand que les autres écartements entre spires du serpentin tubulaire.

3. Absorbeur selon une des revendications 1 et 2, caractérisé en ce qu'un tube fermé (18) est disposé coaxialement à l'intérieur de l'enveloppe (17) de l'absorbeur.

4. Absorbeur selon une des revendications 1 à 3, caractérisé en ce qu'un ou plusieurs autres serpentins tubulaires enroulés en hélice (10, 11, 12) sont prévus dans l'enveloppe (17) de l'absorbeur, ces serpentins s'étendant coaxialement au premier serpentin tubulaire (9) en maintenant un espace d'écartement libre entre les serpentins tubulaires coaxiaux adjacents pour faire passer un gaz auxiliaire.

5. Absorbeur selon une des revendications 1 à 4, caractérisé en ce que la surface du tube des serpentins tubulaires est moletée.

6. Absorbeur selon une des revendications 1 à 5, caractérisé en ce que la surface du tube des serpentins tubulaires est munie d'encoches s'étendant en hélice sur le tour du tube.
